(19) **Europäisches Patentamt**
**European Patent Office**
**Office européen des brevets**

(11) **EP 4 429 345 A1**

(12) **EUROPEAN PATENT APPLICATION**
published in accordance with Art. 153(4) EPC

(43) Date of publication:
**11.09.2024 Bulletin 2024/37**

(21) Application number: **22897189.1**

(22) Date of filing: **22.07.2022**

(51) International Patent Classification (IPC):
**H04W 64/00** *(2009.01)*

(52) Cooperative Patent Classification (CPC):
**H04W 64/00**

(86) International application number:
**PCT/CN2022/107407**

(87) International publication number:
**WO 2023/093093 (01.06.2023 Gazette 2023/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.11.2021 CN 202111433802**

(71) Applicant: **Huawei Technologies Co., Ltd.**
**Shenzhen, Guangdong 518129 (CN)**

(72) Inventors:
• **DONG, Miaomiao**
**Shenzhen, Guangdong 518129 (CN)**

• **DARDARI, Davide**
**Cesena 47522 (IT)**
• **CHEN, Xiang**
**Shenzhen, Guangdong 518129 (CN)**
• **HAN, Wei**
**Shenzhen, Guangdong 518129 (CN)**
• **BAI, Bo**
**Shenzhen, Guangdong 518129 (CN)**

(74) Representative: **Maiwald GmbH**
**Engineering**
**Elisenhof**
**Elisenstrasse 3**
**80335 München (DE)**

(54) **INDOOR POSITIONING METHOD, COMMUNICATION SYSTEM, AND RELATED DEVICE**

(57) Embodiments of this application disclose an indoor positioning method, a communication system, and a related device, to improve indoor positioning accuracy. The method in embodiments of this application includes: An indoor terminal device receives first location information of a network device and second location information of a reconfigurable intelligent surface, to obtain a first reference signal, where the first reference information is obtained by the reconfigurable intelligent surface by reflecting a location reference signal sent by the network device; and determines a target location of the terminal device based on the first reference signal, the first location information, and the second location information.

```
┌─────────────────────────────────────────────────────────────┐
│ Receive first location information and second location        │── 301
│ information from a network device, where the first location   │
│ information indicates a location of the network device, and   │
│ the second location information indicates a location of a      │
│ reconfigurable intelligent surface                             │
└─────────────────────────────────────────────────────────────┘
                              │
                              ▼
┌─────────────────────────────────────────────────────────────┐
│ Obtain a first reference signal, where the first reference     │── 302
│ signal is a signal obtained by the reconfigurable intelligent  │
│ surface by reflecting a location reference signal sent by the  │
│ network device                                                 │
└─────────────────────────────────────────────────────────────┘
                              │
                              ▼
┌─────────────────────────────────────────────────────────────┐
│ Determine a target location of a terminal device based on the  │── 303
│ first reference signal, the first location information, and the │
│ second location information                                     │
└─────────────────────────────────────────────────────────────┘
```

FIG. 3

EP 4 429 345 A1

## Description

This application claims priority to Chinese Patent Application No. 202111433802.8, filed with the China National Intellectual Property Administration on November 29, 2021 and entitled "INDOOR POSITIONING METHOD, COMMUNICATION SYSTEM, AND RELATED DEVICE", which is incorporated herein by reference in its entirety.

## TECHNICAL FIELD

Embodiments of this application relate to the communication field, and in particular, to an indoor positioning method, a communication system, and a related device.

## BACKGROUND

In modern life, a global positioning system reshapes human life and is an important technical milestone in development of science and technology, and location services also play an important role in human life. Because smartphones and other wireless devices are widely used, an indoor positioning requirement emerges. How to implement high-precision indoor positioning becomes an urgent problem to be resolved.

In a conventional indoor positioning technology, differences of time of arrival, angles of arrival, path losses, and other data of signal transmission between at least three stations (stations) and a to-be-positioned device are collected, a straight-line distance between the to-be-positioned device and each station is estimated, the to-be-positioned device is arranged on a circle centered on each station, and location information of the to-be-positioned device is determined based on location information of each station.

This method requires each station to be in line-of-sight communication with the to-be-positioned device. In the global positioning system, a satellite used as a station cannot implement line-of-sight communication with an indoor to-be-positioned device. As a result, an error of a location that is of the to-be-positioned device and that is estimated by the global positioning system is tens of meters. The error is large, and positioning is inaccurate.

## SUMMARY

Embodiments of this application provide an indoor positioning method, a communication system, and a related device. A reconfigurable intelligent surface reflects a location reference signal sent by a network device, to obtain a first reference signal. An indoor terminal device determines a target location of the terminal device by obtaining the first reference signal and by using a signal processing algorithm with reference to a location of the network device and a location of the reconfigurable intelligent surface. A reflective characteristic of the reconfigurable intelligent surface is used, so that the to-be-positioned terminal device can accurately determine the target location even if the to-be-positioned terminal device is in non-line-of-sight communication with the network device. This improves positioning accuracy.

A first aspect of embodiments of this application provides an indoor positioning method, where the method is applied to a terminal device, the terminal device is located indoors, and the method includes:

A network device broadcasts first location information of the network device and second location information of a reconfigurable intelligent surface. In other words, the first location information indicates a location of the network device, and the second location information indicates a location of the reconfigurable intelligent surface. The terminal device may obtain the first location information and the second location information, and store these pieces of information for use during positioning. The network device further sends a location reference signal, and the reconfigurable intelligent surface reflects the location reference signal to obtain a first reference signal. The terminal device obtains the first reference signal, and determines a target location of the terminal device based on the first location information and the second location information.

It can be learned from the foregoing technical solution that embodiments of this application have the following advantages.

The reconfigurable intelligent surface reflects the location reference signal sent by the network device, to obtain the first reference signal. The indoor terminal device obtains the first reference signal, and determines the target location of the terminal device with reference to the location of the network device and the location of the reconfigurable intelligent surface. A reflective characteristic of the reconfigurable intelligent surface is used, so that the to-be-positioned terminal device can accurately determine the target location even if the to-be-positioned terminal device is in non-line-of-sight communication with the network device. This improves positioning accuracy. In addition, in the indoor positioning method provided in this embodiment of this application, only one network device is required, and clock synchronization between the network device and the terminal device is not required. Compared with an existing technical solution, this solution reduces network deployment complexity and costs.

In an optional implementation of the first aspect, the terminal device obtains the first reference signal from a reference signal set. Specifically, in an indoor environment, in addition to the reconfigurable intelligent surface, there are other objects that can scatter the location reference signal, and these objects are collectively referred to as scatterers. The terminal device obtains the reference signal set. In addition to the first reference signal, the reference signal set further includes a second reference signal obtained by the scatterer by scattering the location reference signal. The first reference signal is obtained by the reconfigurable intelligent surface by reflecting the location reference signal based on a reflection coefficient. The terminal device can select and extract the first reference signal from the reference signal set based on the reflection coefficient.

In an optional implementation of the first aspect, the reflection coefficient of the reconfigurable intelligent surface changes according to a preset rule. The preset rule includes that in total transmission duration, a sum of reflection coefficients of any reflecting element of the reconfigurable intelligent surface is 0, and reflection coefficient sequences of any two reflecting elements are orthogonal to each other. The total transmission duration is a time period from starting positioning to obtaining, by the terminal device, all first reference signals used to determine the target location. Optionally, the reflection coefficient changes according to the preset rule, and a change form may be periodic or non-periodic. This is not specifically limited herein.

In this embodiment of this application, the reflection coefficient of the reconfigurable intelligent surface changes according to the preset rule. This provides technical support for the terminal device to extract the first reference signal from the reference signal, and improves implementability of the technical solution.

In an optional implementation of the first aspect, the location reference signal is separately sent by the network device on different subcarriers at different moments.

In this embodiment of this application, the network device separately sends the location reference signal on different subcarriers at different moments. This provides sufficient sampled data, including rich time domain information and frequency domain information, and provides detailed data for the terminal device to determine the target location, to further improve implementability of the technical solution.

In an optional implementation of the first aspect, after obtaining the target location, the terminal device may report the target location to the network device as required, so that a network side obtains the target location, and provides diversified services based on the target location.

A second aspect of embodiments of this application provides an indoor positioning method, where the method is applied to a network device, and the method includes:

The network device sends first location information of the network device and second location information of a reconfigurable intelligent surface to an indoor terminal device, and sends location reference information, so that the reconfigurable intelligent surface reflects the location reference information to obtain a reference signal, and the terminal device determines a target location of the terminal device based on the reference signal, the first location information, and the second location information.

In an optional implementation of the second aspect, the network device separately sends the location reference signal on different subcarriers at different moments.

In an optional implementation of the second aspect, the network device may further send control information to a controller of the reconfigurable intelligent surface, where the control information indicates the reconfigurable intelligent surface to change a reflection coefficient according to a preset rule. In this case, the reference signal is obtained by the reconfigurable intelligent surface by reflecting the location reference information based on the reflection coefficient that changes according to the preset rule. The reflection coefficient changes according to the preset rule, and a change form may be periodic or non-periodic. This is not specifically limited herein.

In an optional implementation of the second aspect, the network device may further receive the target location of the terminal device, and provide diversified services for the terminal device based on the target location.

Beneficial effects of the second aspect of embodiments of this application are similar to those of the first aspect. For details, refer to the first aspect. Details are not described herein again.

A third aspect of embodiments of this application provides a communication system. The communication system includes a network device, a terminal device, and a reconfigurable intelligent surface.

The network device is configured to send first location information and second location information to the indoor terminal device, where the first location information indicates a location of the network device, and the second location information indicates a location of the reconfigurable intelligent surface. The network device is further configured to send a location reference signal.

The reconfigurable intelligent surface is configured to reflect the location reference signal to obtain a first reference signal.

The terminal device is configured to: obtain the first location information, the second location information, and the first reference signal, and determine a target location of the terminal device based on the first location information, the second location information, and the first reference signal.

In an optional implementation of the third aspect, the communication system further includes a scatterer. The scatterer is configured to scatter the location reference signal, to obtain a second reference signal. A manner of obtaining the first reference signal by the terminal device may be specifically: obtaining a reference signal set, where the reference signal set includes the first reference signal and the second reference signal, and the first reference signal is a signal obtained by the reconfigurable intelligent surface by reflecting the location reference signal based on a reflection coefficient; and obtaining the first reference signal from the reference signal set based on the reflection coefficient of the reconfigurable intelligent surface.

In an optional implementation of the third aspect, the network device is further configured to send control information to a controller of the reconfigurable intelligent surface, where the control information indicates the reconfigurable intelligent surface to change the reflection coefficient according to a preset rule. The reflection coefficient changes according to the preset rule, and a change form may be periodic or non-periodic. This is not specifically limited herein.

In an optional implementation of the third aspect, sending the location reference signal by the network device may be separately sending the location reference signal on different subcarriers at different moments.

In an optional implementation of the third aspect, the terminal device is further configured to send the target location to the network device; and the network device is further configured to: receive the target location from the terminal device, and provide diversified services for the terminal device based on the target location.

Beneficial effects of the third aspect of embodiments of this application are similar to those of the first aspect. For details, refer to the first aspect. Details are not described herein again.

A fourth aspect of embodiments of this application provides an indoor positioning method, where the method is applied to a terminal device, the terminal device is located indoors, and the method includes:

The terminal device may receive location information from a network device, where the location information indicates a location of a reconfigurable intelligent surface. The terminal device further sends a location reference signal, and the location reference signal is used to determine a target location of the terminal device. The reconfigurable intelligent surface reflects the location reference signal to obtain a first reference signal. The terminal device obtains the first reference signal, and determines the target location of the terminal device based on the first reference signal and the location information. The terminal device works in a duplex mode, and can receive, when sending the location reference signal, a signal obtained by the reconfigurable intelligent surface and/or a scatterer by reflecting/scattering the location reference signal.

In this embodiment of this application, the location reference signal may be sent by the terminal device. In this case, the target location of the terminal device can be determined without the location information of the network device, to reduce a calculation amount. In addition, manners of determining the target location of the terminal device are also enriched.

In an optional implementation of the fourth aspect, the terminal device obtains the first reference signal from a reference signal set. Specifically, the location reference signal sent by the terminal device is reflected by the reconfigurable intelligent surface, and is scattered by the scatterer. Therefore, the terminal device obtains the reference signal set. The reference signal set includes the first reference signal and a second reference signal. The first reference signal is obtained by the reconfigurable intelligent surface by reflecting the location reference signal based on a reflection coefficient, and the second reference signal is obtained by the scatterer by scattering the location reference signal. The terminal device obtains the first reference signal from the reference signal based on the reflection coefficient.

In an optional implementation of the fourth aspect, the reflection coefficient of the reconfigurable intelligent surface changes according to a preset rule. The preset rule includes that in total transmission duration, a sum of reflection coefficients of any reflecting element of the reconfigurable intelligent surface is 0, and reflection coefficient sequences of any two reflecting elements are orthogonal to each other. The total transmission duration is a time period from starting positioning to obtaining, by the terminal device, all first reference signals used to determine the target location. Optionally, the reflection coefficient changes according to the preset rule, and a change form may be periodic or non-periodic. This is not specifically limited herein.

The reflection coefficient of the reconfigurable intelligent surface changes according to the preset rule. This provides technical support for the terminal device to extract the first reference signal from the reference signal, and improves implementability of the technical solution.

In an optional implementation of the fourth aspect, specifically, sending the location reference signal by the terminal device is separately sending the location reference signal on different subcarriers at different moments.

In this embodiment of this application, the terminal device separately sends the location reference signal on different subcarriers at different moments. This provides sufficient sampled data, including rich time domain information and frequency domain information, and provides detailed data for the terminal device to determine the target location, to further improve implementability of the technical solution.

In an optional implementation of the fourth aspect, after determining the target location, the terminal device sends the target location to the network device, so that the network device provides diversified services for the terminal device based on the target location.

A fifth aspect of embodiments of this application provides a communication system. The communication system includes a network device, a terminal device, and a reconfigurable intelligent surface.

The network device is configured to send location information, where the location information indicates a location of the reconfigurable intelligent surface.

The terminal device is configured to send a location reference signal, where the location reference signal is used to determine a target location of the terminal device.

The reconfigurable intelligent surface is configured to reflect the location reference signal to obtain a first reference signal.

The terminal device is further configured to: obtain the location information and the first reference signal, and determine the target location of the terminal device based on the location information and the first reference signal.

In an optional implementation of the fifth aspect, the communication system further includes a scatterer, where the scatterer is configured to scatter the location reference signal to obtain a second reference signal.

The terminal device is specifically configured to: obtain a reference signal set, where the reference signal set includes the first reference signal and the second reference signal, and the first reference signal is obtained by the reconfigurable intelligent surface by reflecting the location reference signal based on a reflection coefficient, and obtain the first reference signal from the reference signal set based on the reflection coefficient of the reconfigurable intelligent surface.

In an optional implementation of the fifth aspect, the network device is further configured to send control information to a controller of the reconfigurable intelligent surface, where the control information indicates the reconfigurable intelligent surface to change the reflection coefficient according to a preset rule. In other words, the reflection coefficient changes according to the preset rule, and the terminal device can obtain the first reference signal from the reference signal set according to a change rule of the reflection coefficient (namely, the preset rule). The reflection coefficient changes according to the preset rule, and a change form may be periodic or non-periodic. This is not specifically limited herein. In an optional implementation of the fifth aspect, the terminal device separately sends the location reference signal on different subcarriers at different moments.

In an optional implementation of the fifth aspect, the terminal device is further configured to send the target location to the network device, and the network device is further configured to: receive the target location, and provide diversified services for the terminal device based on the target location.

Beneficial effects of the fifth aspect of embodiments of this application are similar to those of the fourth aspect. For details, refer to the fourth aspect. Details are not described herein again.

A sixth aspect of embodiments of this application further provides a terminal device, where the terminal device is located indoors and includes:

an obtaining unit, configured to receive first location information and second location information from a network device, where the first location information indicates a location of the network device, and the second location information indicates a location of a reconfigurable intelligent surface, where

the obtaining unit is further configured to obtain a first reference signal, where the first reference signal is a signal obtained by the reconfigurable intelligent surface by reflecting a location reference signal sent by the network device; and

a processing unit, configured to determine a target location of the terminal device based on the first reference signal, the first location information, and the second location information.

The terminal device is configured to perform the method in the first aspect. Beneficial effects of the sixth aspect of embodiments of this application are similar to those of the first aspect. For details, refer to the first aspect. Details are not described herein again.

A seventh aspect of embodiments of this application further provides a network device, including:

a sending unit, configured to: send first location information of the network device and second location information of a reconfigurable intelligent surface to a terminal device, where the terminal device is located indoors; and send a location reference signal, so that the reconfigurable intelligent surface reflects the location reference signal to obtain a reference signal, and the terminal device determines a target location of the terminal device based on the reference signal, the first location information, and the second location information.

The network device is configured to perform the method in the second aspect. Beneficial effects of the seventh aspect of embodiments of this application are similar to those of the second aspect. For details, refer to the second aspect. Details are not described herein again.

An eighth aspect of embodiments of this application provides a terminal device, where the terminal device is located indoors and includes:

an obtaining unit, configured to receive location information from a network device, where the location information indicates a location of a reconfigurable intelligent surface;

a sending unit, configured to send a location reference signal, where the location reference signal is used to determine a target location of the terminal device, where
the obtaining unit is further configured to obtain a first reference signal, where the first reference signal is a signal obtained by the reconfigurable intelligent surface by reflecting the location reference signal; and
a processing unit, configured to determine the target location of the terminal device based on the first reference signal and the location information.

The terminal device is configured to perform the method in the fourth aspect. Beneficial effects of the eighth aspect of embodiments of this application are similar to those of the fourth aspect. For details, refer to the fourth aspect. Details are not described herein again.

A ninth aspect of embodiments of this application provides a terminal device, including a processor, a memory, and a communication interface. The processor and the memory are connected to the communication interface, and the processor is configured to perform the method in the first aspect or the fourth aspect. Beneficial effects shown in this aspect are similar to those in the first aspect or the fourth aspect, and details are not described herein again.

A tenth aspect of embodiments of this application provides a network device, including a processor, a memory, and a communication interface. The processor and the memory are connected to the communication interface, and the processor is configured to perform the method in the second aspect. Beneficial effects shown in this aspect are similar to those in the second aspect, and details are not described herein again.

An eleventh aspect of embodiments of this application provides a computer-readable storage medium, where the computer-readable storage medium stores instructions, and when the instructions are run on a computer, the computer performs the method in the first aspect, the second aspect, or the fourth aspect

A twelfth aspect of embodiments of this application provides a computer program product. When the computer program product is executed on a computer, the computer performs the method in the first aspect, the second aspect, or the fourth aspect.

## BRIEF DESCRIPTION OF DRAWINGS

FIG. 1 is a schematic diagram in which a reconfigurable intelligent surface reflects a signal;
FIG. 2 is a schematic diagram of an architecture of a communication system according to an embodiment of this application;
FIG. 3 is a schematic flowchart of an indoor positioning method according to an embodiment of this application;
FIG. 4 is another schematic flowchart of an indoor positioning method according to an embodiment of this application;
FIG. 5 is another schematic flowchart of an indoor positioning method according to an embodiment of this application;
FIG. 6 is a schematic diagram of a logical relationship between modules in a communication system according to an embodiment of this application;
FIG. 7 is another schematic flowchart of an indoor positioning method according to an embodiment of this application;
FIG. 8 is another schematic flowchart of an indoor positioning method according to an embodiment of this application;
FIG. 9 is a schematic diagram of another logical relationship between modules in a communication system according to an embodiment of this application;
FIG. 10 is another schematic flowchart of an indoor positioning method according to an embodiment of this application;
FIG. 11 is a schematic diagram of an experiment result of an indoor positioning method according to an embodiment of this application;
FIG. 12 is a schematic diagram of another experiment result of an indoor positioning method according to an embodiment of this application;
FIG. 13 is a schematic diagram of a structure of a terminal device according to an embodiment of this application;
FIG. 14 is a schematic diagram of a structure of a network device according to an embodiment of this application;
FIG. 15 is a schematic diagram of another structure of a terminal device according to an embodiment of this application; and
FIG. 16 is a schematic diagram of a structure of a computer device according to an embodiment of this application.

## DESCRIPTION OF EMBODIMENTS

Embodiments of this application provide an indoor positioning method, a communication system, and a related device. A reconfigurable intelligent surface reflects a location reference signal sent by a network device, to obtain a first reference signal. An indoor terminal device obtains the first reference signal and determines a target location of the terminal device with reference to a location of the network device and a location of the reconfigurable intelligent surface. A reflective characteristic of the reconfigurable intelligent surface is used, so that the to-be-positioned terminal device can accurately determine the target location even if the to-be-positioned terminal device is in non-line-of-sight communication with the network device. This improves positioning accuracy.

First, proper nouns that may be used in embodiments of this application are described.

1. Reconfigurable intelligent surface (reconfigurable intelligent surface, RIS)

The RIS is a two-dimensional plane formed by a large quantity of low-cost passive reflecting elements. A size and an internal structure of each passive reflecting element are specially designed, so that the passive reflecting element has different reflection coefficients when a controller applies different voltages to the passive reflecting elements. A phase and/or an amplitude of an incident signal is changed by changing the reflection coefficient, to obtain different reflected signals.

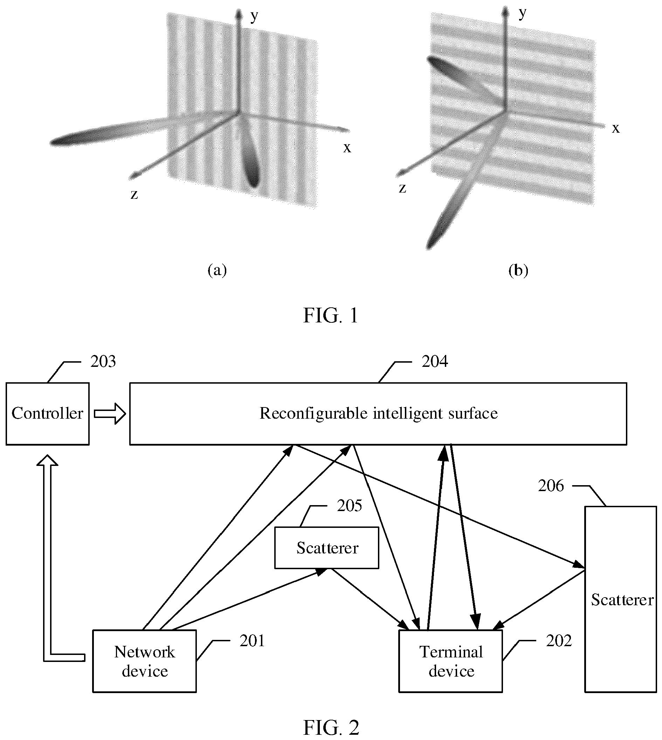

FIG. 1 is a schematic diagram in which a reconfigurable intelligent surface reflects a signal. In (a) shown in FIG. 1, a controller sets a voltage value V1 for each passive reflecting element of the RIS; and in (b) shown in FIG. 1, the controller sets a voltage value V2 for each passive reflecting element of the RIS. V1 is different from V2. Therefore, a reflection coefficient of each passive reflecting element in (a) is different from a reflection coefficient of each passive reflecting element in (b), and different reflected signals are generated for a same incident signal. In the embodiment shown in FIG. 1, a beam direction indicates a signal reflection direction.

Because the RIS is a passive component, and has features such as low manufacturing costs and low power consumption, a large area of the RIS may also be obtained when costs are limited. In general, the RIS is made of light mass materials and is in a shape of conformal geometry. This enables the RIS to be easily installed on or removed from planes such as a wall and ceiling. In addition, the RIS may be further compatible with an existing wireless communication system, and has high flexibility, so that the RIS may be used in a wireless network with low deployment costs and integration costs. The RIS can be deployed indoors based on a control feature of the RIS on an incident signal to form an RIS communication system. This enhances indoor signals and improves indoor signal coverage. These advantages make the RIS have a wide application prospect.

2. Line-of-sight communication and non-line-of-sight communication

Propagation conditions of a wireless communication system are classified into two environments: line-of-sight (line-of-sight, LOS) and non-line-of-sight (non-line-of-sight NLOS). Under a line-of-sight condition, a wireless signal can be transmitted in a straight line between a sending device and a receiving device without obstruction. In this case, communication between a sending end and a receiving end is called the line-of-sight communication. The non-line-of-sight communication is non-direct point-to-point communication between a sending device and a receiving device. In a non-line-of- sight communication system, a line of sight between the sending device and the receiving device is blocked, and the sending device cannot directly see the receiving device.

3. Scatterer

Objects in a physical environment can be called scatterers, and can scatter signals. Scattering in embodiments of this application is scattering in a broad sense, including reflection, refraction, and the like. If a scatterer blocks an LOS path between a sending device and a receiving device, the sending device and the receiving device are in non-line-of-sight communication.

The following describes a communication system provided in embodiments of this application. FIG. 2 is a schematic diagram of an architecture of the communication system according to an embodiment of this application.

As shown in FIG. 2, the communication system includes a network device 201, a terminal device 202, a controller 203, a reconfigurable intelligent surface 204, a scatterer 205, and a scatterer 206.

The controller 203 is connected to the network device 201 through a front haul link or a rear haul link. The network device 201 can control the reconfigurable intelligent surface 204 by using the controller 203. Specifically, the network device 201 indicates the controller 203 to change a reflection coefficient of the reconfigurable intelligent surface 204, to change a signal reflected by the reconfigurable intelligent surface 204.

The network device 201 may further send location information of the network device 201, location information of the reconfigurable intelligent surface 204, and a location reference signal, or send only location information of the reconfigurable intelligent surface 204. These pieces of information can provide a reference for the terminal device 202 to determine a target location of the terminal device 202. When the network device 201 sends only the location information of the reconfigurable intelligent surface 204, the terminal device 202 may also send the location reference signal.

The reconfigurable intelligent surface 204 can reflect the location reference signal from the network device 201 or the terminal device 202. The scatterer 205 and the scatterer 206 also scatter the location reference signal. In addition, the signal reflected by the reconfigurable intelligent surface 204 may also be scattered again by the scatterer 205 or the scatterer 206.

The terminal device 202 can obtain all reflected and scattered signals, extract, from all the signals, the signal reflected by the reconfigurable intelligent surface 204, and then determine the target location of the terminal device 202 with reference to respective locations of the network device 201 and the reconfigurable intelligent surface 204, or a location of the reconfigurable intelligent surface 204.

It should be noted that the controller 203 and the reconfigurable intelligent surface 204 shown in FIG. 2 are merely examples, and do not constitute a limitation on a structural relationship between the controller 203 and the reconfigurable intelligent surface 204. During actual application, the controller 203 may be further coupled to the reconfigurable intelligent surface 204. This is not specifically limited herein. During actual application, the communication system may further include more reconfigurable intelligent surfaces. This is not specifically limited herein.

Optionally, the network device in embodiments of this application may be a station in different networks, may be a base station in a cellular network, or may be a wireless access point (access point, AP) in a wireless (Wi-Fi) network. In addition, the network device may be another device that can communicate with the terminal device and send the location reference signal. This is not specifically limited herein.

Optionally, the terminal device in embodiments of this application may include various handheld devices, vehicle-mounted devices, wearable devices, or computing devices that have a wireless communication function, or other processing devices connected to a wireless modem. The terminal device may also be referred to as a terminal (terminal). The terminal device may also be a subscriber unit (subscriber unit), a cellular phone (cellular phone), a smartphone (smartphone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, or the like. This is not limited herein.

In embodiments of this application, the location reference signal used to determine the target location of the terminal device may be sent by the network device, or may be sent by the terminal device. This is not specifically limited herein. The following separately describes possible cases.

1. The network device sends the location reference signal.

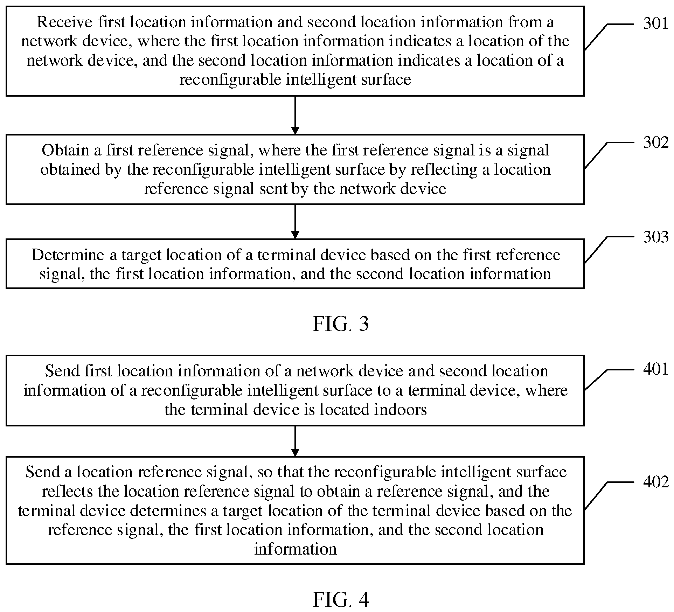

FIG. 3 is a schematic flowchart of an indoor positioning method according to an embodiment of this application. The method includes the following steps.

301: Receive first location information and second location information from a network device, where the first location information indicates a location of the network device, and the second location information indicates a location of a reconfigurable intelligent surface.

After the network device and the reconfigurable intelligent surface are installed, these pieces of location information are fixed, and the location information may be pre-stored in the network device. The network device may broadcast the first location information of the network device and the second location information of the reconfigurable intelligent surface to the outside. The first location information and the second location information provide a reference for determining a target location of a to-be-positioned device. A terminal device can receive the first location information and the second location information. Specifically, after receiving a broadcast signal from the network device, the terminal device demodulates the broadcast signal to obtain the first location information and the second location information. After obtaining the first location information and the second location information, the terminal device may locally store the first location information and the second location information.

302: Obtain a first reference signal, where the first reference signal is a signal obtained by the reconfigurable intelligent surface by reflecting a location reference signal sent by the network device.

Specifically, the terminal device extracts the first reference signal from a reference signal set. In addition to the first reference signal, the reference signal further includes a second reference signal obtained by a scatterer by scattering the location reference signal.

During positioning, the network device may separately send the location reference signal on different subcarriers at different moments. For example, a location reference signal sent on a subcarrier $n=\{1, 2, ..., N\}$ at a moment $t=\{1, 2, ..., T\}$ is $X_{n,t}$. It should be noted that, in this embodiment of this application, location reference signals sent on different subcarriers or at different moments may be the same, or may be different. This is not specifically limited herein. For ease of description, an example in which location reference signals sent on all subcarriers at all moments are the same, that is, $X_{n,t}=1$ is used in the following description.

In this embodiment of this application, the network device separately sends the location reference signal on different subcarriers at different moments. This provides sufficient sampled data, including rich time domain information and frequency domain information, and provides detailed data for the terminal device to determine a target location, to further improve implementability of the technical solution.

During positioning, a reflection coefficient of the reconfigurable intelligent surface changes according to a preset rule. The preset rule includes that in total transmission duration, a sum of reflection coefficients of any reflecting element of the reconfigurable intelligent surface is 0, and reflection coefficient sequences of any two reflecting elements are orthogonal to each other. The total transmission duration is a time period from starting positioning to obtaining, by the terminal device, all first reference signals used to determine the target location. Optionally, the reflection coefficient may periodically or non-periodically change according to the preset rule. This is not specifically limited herein.

It is assumed that the reflection coefficient of the reconfigurable intelligent surface changes at different moments t={ 1, 2, ..., T} according to the preset rule, and there are K reflecting elements on a surface of the reconfigurable intelligent surface. A reflection coefficient of a reflecting element k at a moment t may be $\beta_{t,k} = \beta_0 e^{j\psi t,k}$, where k={ 1, 2, ..., K}, and $\beta_0$ indicates an amplitude of a signal. A design and manufacturing process of the reconfigurable intelligent surface can enable amplitudes $\beta_0$ of all reflecting elements to be the same and the amplitudes $\beta_0$ do not change with time. $\psi_{t,k}$ indicates a phase of a signal reflected by the reflecting element k at the moment t; and j indicates a complex number. A rule of change between the reflection coefficient of the reflecting element k and the moment t satisfies the following formulas:

$$(\text{Formula 1}): \sum_{t=1}^{T} \beta_{t,k} = 0, \forall k\,; \text{ and (Formula 2)}: \sum_{t=1}^{T} \beta_{t,k}\beta_{t,m}^* = 0, \forall k \neq m.$$

Formula 1 physically means that a sum of reflection coefficients of the reflecting element k within T time is required to be 0. In Formula 2, $\beta_{t,m}^*$ indicates conjugate transpose of a reflection coefficient $\beta_{t,m}$ , and Formula 2 physically means that a reflection sequence $[\beta_{1,k}, \beta_{2,k}, \ldots, \beta_{T,k}]$ of the reflecting element k and a reflection coefficient sequence $[\beta_{1,m}, \beta_{2,m}, \ldots, \beta_{T,m}]$ of a reflecting element m are required to be orthogonal to each other.

It should be noted that, when the quantity K of reflecting elements of the reconfigurable intelligent surface is greater than T, Formula 2 cannot be satisfied. Therefore, this embodiment of this application further provides a reflection coefficient sequence that approximately satisfies Formula 1 and Formula 2. The reflection sequence is as follows:

$$\beta_{t,k} = \beta_0 e^{j\psi t,k}, \text{ where if T<K, } \psi_{t,k} = \frac{2\pi t \lfloor kT/m \rfloor}{T}; \text{ or if T≥K, } \psi_{t,k} = \frac{2\pi kt}{T}.$$

A symbol "⌊⌋" indicates rounding down. For example, [x] indicates rounding down to a largest integer in all values less than x.

After the location reference signal sent by the network device is reflected by the reconfigurable intelligent surface and scattered by the scatterer, the signals are received by the terminal device. To be specific, the terminal device obtains the reference signal set. If the location reference signal is: $X_{n,t}$=1, the reference signal set is: $y_{n,t} = h_{n,t}(\beta_t, P) + g_n(P) + w_n$, where $h_{n,t}(\beta_t, P)$ indicates the first reference signal, namely, a signal obtained by the reconfigurable intelligent surface by reflecting the location reference signal, $g_n(P)$ indicates the second reference signal, namely, a signal obtained by the scatterer by scattering the location reference signal, $w_n$ is white Gaussian noise, and indicates a noise signal, $h_{n,t}$ indicates a channel of a link "network device-reconfigurable intelligent surface-terminal device", $g_n$ indicates a channel of a link "network device-scatterer-terminal device", $\beta_t = \{\beta_{t,1}, \beta_{t,2}, \ldots, \beta_{t,K}\}$ indicates a reflection coefficient of the reconfigurable intelligent surface at the moment t, and the vector P indicates the target location of the to-be-positioned device.

With reference to Formula 1, it may be obtained that an average value of the reference signal set is $\frac{1}{T}\sum_{t=1}^{T} y_{n,t} = g_n(P) + w_n$ . Therefore, the terminal device separates the first reference signal $\bar{y}_{n,t} = y_{n,t} - \frac{1}{T}\sum_{t=1}^{T} y_{n,t}$ from the reference signal set, where $\bar{Y}_{n,t}$ is an estimated value of $h_{n,t}(\beta_t, P)$.

It should be noted that there is no necessary sequence for performing step 301 and step 302. Step 301 may be performed first, or step 302 may be performed first, or step 301 and step 302 may be performed simultaneously. This is not specifically limited herein.

303: Determine the target location of the terminal device based on the first reference signal, the first location information, and the second location information.

After obtaining the first reference signal, the terminal device processes the first reference signal, and determines the target location of the terminal device based on the first location information and the second location information. Specifically, on a same subcarrier n, the terminal device performs inner product on a signal sequence $\{\bar{y}_{n,1}, \bar{y}_{n,2}, \ldots,$

$\bar{y}_{n,T}$} at different moments and a reflection coefficient sequence {$\beta_{1,m}$, $\beta_{2,m}$, ... , $\beta_{T,m}$} of an $m^{th}$ reflecting element of the RIS at different moments, and obtains a frequency domain channel $U_{m,n}$ of a link "network device-$m^{th}$ reflecting element of the RIS-terminal device" on the subcarrier n according to a coefficient variable rule (namely, Formula 2)

$$\sum_{t=1}^{T} \beta_{t,k}\beta_{t,m}^{*} = 0, \forall k \neq m$$

of the reconfigurable intelligent surface. A specific calculation manner of $U_{m,n}$ is as follows:

$$U_{m,n} = \frac{1}{T\beta_0} \sum_{t=1}^{T} \bar{y}_{n,t}\, \beta_{t,m}^{*}.$$

Frequency domain channels {$U_{m,1}$, $U_{m,2}$, ... , $U_{m,N}$} of the link "network device-$m^{th}$ reflecting element of the RIS-terminal device" on different subcarriers are obtained, and Fourier transform is performed on these frequency domain channels to obtain time domain channels Zm of the link "network device-$m^{th}$ reflecting element of the RIS-terminal device". A delay of a path is extracted from the time domain channels Zm, to calculate a distance of the link "network device-$m^{th}$ reflecting element of the RIS-terminal device". The same operation is performed on reflecting elements of a plurality of RISs with large spacings, so that distances of a plurality of different links can be obtained. Based on the foregoing distances, the location of the network device, and the location of the RIS, locations of different reflecting elements of the RIS to the terminal device can be calculated. A range of a location of the terminal device can be estimated based on locations of a plurality of reflecting elements to the terminal device. Then, the range is set as a search interval, and a location P of the terminal device may be found by using the first reference signal $\bar{y}_{n,1}$ and the following objective function:

$$\hat{P} = \arg\min_{P} \sum_{n=1}^{N} \left( \sum_{t=1}^{T} \left| \frac{\bar{y}_{n,t}}{\left\|\{\bar{y}_{n,t}\}\right\|} - \frac{1}{\left\|h_{n,t}(\beta_t, P)\right\|} h_{n,t}(\beta_t, P) \right|^2 \right).$$

$\hat{P}$ indicates an approximate value of the target location P, and $\arg\min_{P} F(x)$ indicates a value of P when a value of the function F(x) is the smallest.

In this embodiment of this application, the reconfigurable intelligent surface reflects the location reference signal sent by the network device, to obtain the first reference signal. The indoor terminal device obtains the first reference signal, and determines the target location of the terminal device with reference to the location of the network device and the location of the reconfigurable intelligent surface. A reflective characteristic of the reconfigurable intelligent surface is used, so that the to-be-positioned terminal device can accurately determine the target location even if the to-be-positioned terminal device is in non-line-of-sight communication with the network device. This improves positioning accuracy. In addition, in the indoor positioning method provided in this embodiment of this application, only one network device is required, and clock synchronization between the network device and the terminal device is not required. Compared with an existing technical solution, this solution reduces network deployment complexity and costs.

In some optional embodiments, there may be a plurality of reconfigurable intelligent surfaces or a plurality of terminal devices indoors. When there are a plurality of reconfigurable intelligent surfaces, a terminal device may determine a target location of the terminal device by using one reconfigurable intelligent surface, or may determine a location of the terminal device by using the plurality of reconfigurable intelligent surfaces. This is not specifically limited herein. When there are a plurality of terminal devices, each terminal device may determine a target location of the terminal device in the manner shown in FIG. 3.

In some optional embodiments, after obtaining the target location, the terminal device may report the target location to the network device, so that the network device provides the target location for a network side, and the network side provides diversified services for the terminal device.

FIG. 3 describes the indoor positioning method from a perspective of the terminal device. The following describes the indoor positioning method on a network device side. FIG. 4 is a schematic flowchart of an indoor positioning method according to an embodiment of this application. The method includes the following steps.

401: Send first location information of a network device and second location information of a reconfigurable intelligent surface to a terminal device, where the terminal device is located indoors.

After the network device and the reconfigurable intelligent surface are installed, the location information is fixed, and these pieces of location information may be pre-stored in the network device. A manner in which the network device sends the first location information of the network device and the second location information of the reconfigurable intelligent surface to the terminal device may be broadcasting the first location information and the second location information to the outside.

402: Send a location reference signal, so that the reconfigurable intelligent surface reflects the location reference signal to obtain a reference signal, and the terminal device determines a target location of the terminal device based on the reference signal, the first location information, and the second location information.

The network device may separately send the location reference signal on different subcarriers at different moments, to provide a reference for the terminal device to locate the location of the terminal device. Specifically, a process in which the terminal device determines the location information of the terminal device is described in the embodiment shown in FIG. 3, and details are not described herein again.

In some optional embodiments, the network device may further control a reflection coefficient of the reconfigurable intelligent surface. The network device may send control information to a controller of the reconfigurable intelligent surface, where the control information indicates the reconfigurable intelligent surface to change the reflection coefficient according to a preset rule. The reconfigurable intelligent surface reflects the location reference signal differently by adjusting the reflection coefficient, to obtain reference signals. The reflection coefficient changes according to the preset rule, and a change form may be periodic or non-periodic. This is not specifically limited herein.

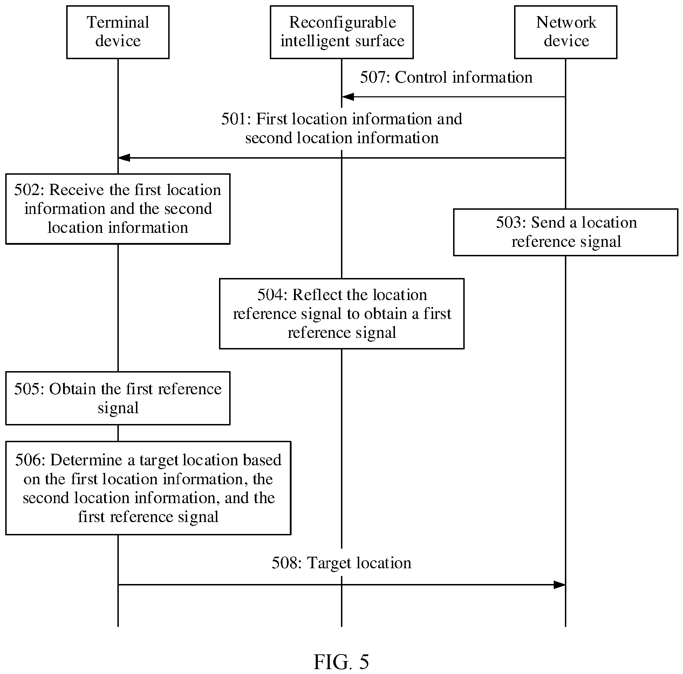

The following describes embodiments shown in FIG. 3 and FIG. 4 from a perspective of a communication system. FIG. 5 is a schematic flowchart of an indoor positioning method according to an embodiment of this application. The communication system includes a terminal device, a reconfigurable intelligent surface, and a network device.

501: The network device sends first location information and second location information to the terminal device.

Step 501 is similar to step 401. For details, refer to the description of step 401 in the embodiment shown in FIG. 4. Details are not described herein again.

502: The terminal device receives the first location information and the second location information.

Step 502 is similar to step 301. For details, refer to the description of step 301 in the embodiment shown in FIG. 3. Details are not described herein again.

503: The network device sends a location reference signal.

Optionally, the network device may separately send the location reference signal on different subcarriers at different moments, to provide a reference for the terminal device to determine a target location of the terminal device.

504: The reconfigurable intelligent surface reflects the location reference signal to obtain a first reference signal.

Optionally, before step 504, the network device may perform step 507, that is, send control information to a controller of the reconfigurable intelligent surface. The control information indicates the reconfigurable intelligent surface to change a reflection coefficient according to a preset rule. In this case, the first reference signal is obtained by the reconfigurable intelligent surface by reflecting the location reference information based on the reflection coefficient. The reflection coefficient changes according to the preset rule, and a change form may be periodic or non-periodic. This is not specifically limited herein.

505: The terminal device obtains the first reference signal.

In some optional embodiments, the communication system further includes a scatterer, configured to scatter the location reference signal, to obtain a second reference signal. In this case, the terminal device obtains the first reference signal by extracting the first reference signal from a reference signal set. The reference signal set includes the first reference signal and the second reference signal, and the first reference signal is a signal obtained by the reconfigurable intelligent surface by reflecting the location reference signal based on the reflection coefficient. Therefore, the terminal device can obtain the first reference signal from the reference signal set based on the reflection coefficient. A specific process is similar to step 302. For details, refer to the description of step 302 in the embodiment shown in FIG. 3. Details are not described herein again.

506: The terminal device determines the target location based on the first location information, the second location information, and the first reference signal.

Step 506 is similar to step 303. For details, refer to the description of step 303 in the embodiment shown in FIG. 3. Details are not described herein again.

In some optional embodiments, after step 506, the terminal device further performs step 508, that is, sends the target location to the network device, so that the network device sends the target location to a network side, and the network side provides diversified services based on the target location.

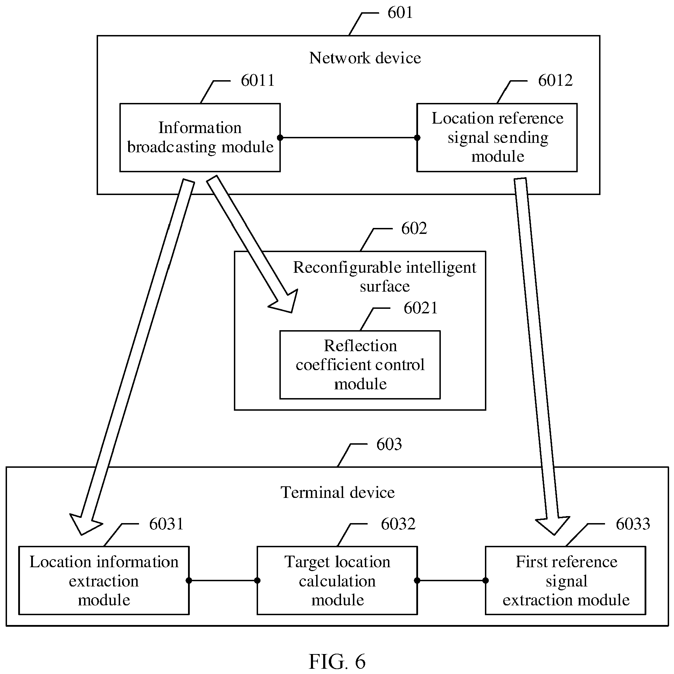

Based on the embodiment shown in FIG. 5, in this embodiment of this application, a logical relationship between modules in the communication system is shown in FIG. 6.

As shown in FIG. 6, a network device 601 includes an information broadcasting module 6011 and a location reference signal sending module 6012. A reconfigurable intelligent surface 602 includes a reflection coefficient control module 6021. A terminal device 603 includes a location information extraction module 6031, a target location calculation module 6032, and a first reference information extraction module 6033.

The information broadcasting module 6011 is configured to broadcast first location information and second location information, and send control information used to change a reflection coefficient of the reconfigurable intelligent surface. This corresponds to step 501 and step 507 in the embodiment shown in FIG. 5. The location reference signal sending module 6012 sends a location reference signal. This corresponds to step 503 in the embodiment shown in FIG. 5. The reflection coefficient control module 6021 is configured to change the reflection coefficient of the reconfigurable intelligent surface 602. The location information extraction module 6031 is configured to obtain the first location information and the second location information. This corresponds to step 502 in the embodiment shown in FIG. 5. The first reference signal extraction module 6033 is configured to obtain a first reference signal. This corresponds to step 505 in the embodiment shown in FIG. 5. The target location calculation module 6032 is configured to determine a target location of the terminal device 603. This corresponds to step 506 in the embodiment shown in FIG. 5.

It should be noted that an arrow in FIG. 6 indicates data transfer between modules. An arrow between the location reference signal sending module 6012 and the first reference signal extraction module 6033 is used as an example. The arrow indicates that a source of the first reference signal is the network device 601, and an end point is the terminal device 603. After the location reference signal sent by the location reference signal sending module 6012 is reflected by the reconfigurable intelligent surface 602, the first reference signal is obtained, and the terminal device 603 obtains the first reference signal.

2. The terminal device sends the location reference signal.

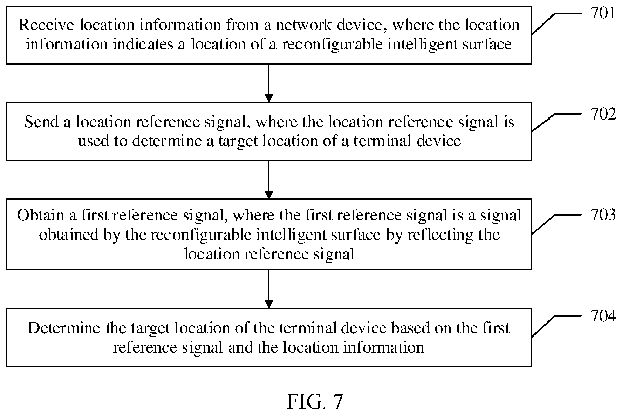

In this embodiment of this application, in addition to being sent by the network device, the location reference signal may also be sent by the terminal device. The following describes this case. FIG. 7 is a schematic flowchart of an indoor positioning method according to an embodiment of this application. The method includes the following steps.

701: Receive location information from a network device, where the location information indicates a location of a reconfigurable intelligent surface.

After the reconfigurable intelligent surface is installed, the location information is fixed, and the location information may be pre-stored in the network device. The network device may broadcast the location information of the reconfigurable intelligent surface to the outside, and the location information provides a reference for determining a target location of a to-be-positioned device. A terminal device can receive the location information of the reconfigurable intelligent surface. Specifically, after receiving a broadcast signal from the network device, the terminal device demodulates the broadcast signal to obtain the location information of the reflecting surface. After obtaining the location information of the reflecting surface, the terminal device may locally store the location information.

702: Send a location reference signal, where the location reference signal is used to determine a target location of the terminal device.

The terminal device may separately send the location reference signal on different subcarriers at different moments. This provides sufficient sampled data, including rich time domain information and frequency domain information, and provides detailed data for the terminal device to determine the target location, to further improve implementability of the technical solution.

703: Obtain a first reference signal, where the first reference signal is a signal obtained by the reconfigurable intelligent surface by reflecting the location reference signal.

In some optional embodiments, that the terminal device obtains the first reference signal is extracting the first reference signal from a reference signal set based on a reflection coefficient. The reference signal set includes the first reference signal obtained by the reconfigurable intelligent surface by reflecting the location reference signal based on the reflection coefficient, and a second reference signal obtained by a scatterer by scattering the location reference signal. The reflection coefficient changes according to a preset rule. A specific process is similar to step 302. For details, refer to the description of step 302 in the embodiment shown in FIG. 3. Details are not described herein again.

704: Determine the target location of the terminal device based on the first reference signal and the location information.

Step 704 is similar to step 303. A difference lies in that in the following. In the embodiment shown in FIG. 7, because the location reference information is sent by the terminal device and is irrelevant to the network device, a location of the network device does not need to be obtained, and the target location of the terminal device can also be calculated. In step 704, a link calculated by the terminal device is no longer a "network device-$m^{th}$ reflecting element of the RIS-terminal device", but a link "$m^{th}$ reflecting element of the RIS-terminal device". A calculation principle of the link is similar to that of step 303. For details, refer to the description of step 303 in the embodiment shown in FIG. 3. Details are not described herein again.

In this embodiment of this application, the location reference signal may be sent by the terminal device. In this case, the target location of the terminal device can be determined without the location information of the network device, to reduce a calculation amount. In addition, manners of determining the target location of the terminal device are also enriched.

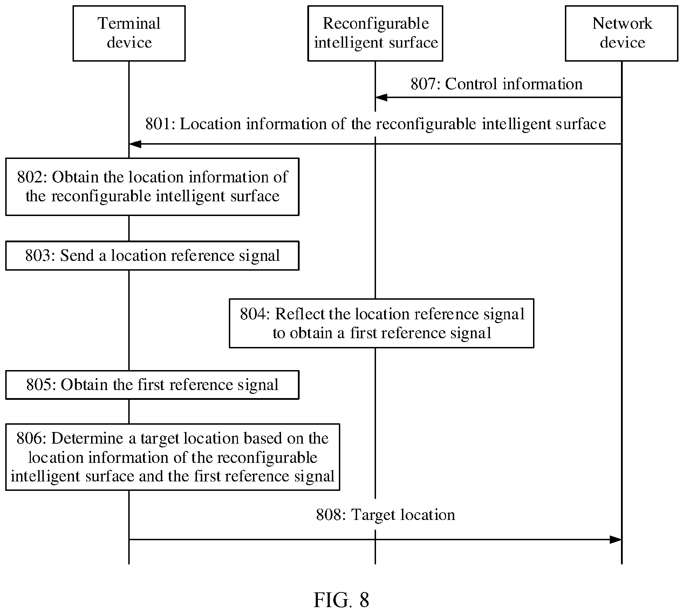

The following describes, from a perspective of a communication system, a case in which the terminal device sends the location reference signal. FIG. 8 is a schematic flowchart of an indoor positioning method according to an embodiment of this application. The communication system includes a terminal device, a reconfigurable intelligent surface, and a network device.

801: The network device sends location information of the reconfigurable intelligent surface to the terminal device.

After the reconfigurable intelligent surface is installed, the location information of the reconfigurable intelligent surface is fixed. The network device can obtain the location information, store the location information, and send the location information to the terminal device.

802: The terminal device obtains the location information of the reconfigurable intelligent surface.

Step 802 is similar to step 701. For details, refer to the description of step 701 in the embodiment shown in FIG. 7. Details are not described herein again.

803: The terminal device sends a location reference signal.

Optionally, the terminal device may separately send the location reference signal on different subcarriers at different moments, to provide a reference for determining a target location of the terminal device. Step 803 is similar to step 702. For details, refer to the description of step 702 in the embodiment shown in FIG. 7. Details are not described herein again.

804: The reconfigurable intelligent surface reflects the location reference signal to obtain a first reference signal.

Optionally, before step 804, the network device may perform step 807, that is, send control information to a controller of the reconfigurable intelligent surface. The control information indicates the reconfigurable intelligent surface to change a reflection coefficient according to a preset rule. In this case, the first reference signal is obtained by the reconfigurable intelligent surface by reflecting the location reference information based on the reflection coefficient. The reflection coefficient changes according to the preset rule, and a change form may be periodic or non-periodic. This is not specifically limited herein.

805: The terminal device obtains the first reference signal.

In some optional embodiments, the communication system further includes a scatterer, configured to scatter the location reference signal, to obtain a second reference signal. In this case, the terminal device obtains the first reference signal by extracting the first reference signal from a reference signal set. The reference signal set includes the first reference signal and the second reference signal, and the first reference signal is a signal obtained by the reconfigurable intelligent surface by reflecting the location reference signal based on the reflection coefficient. Therefore, the terminal device can obtain the first reference signal from the reference signal set according to a change rule of the reflection coefficient of the reconfigurable intelligent surface. A specific process is similar to step 703. For details, refer to the description of step 703 in the embodiment shown in FIG. 7. Details are not described herein again.

806: The terminal device determines the target location based on the location information of the reconfigurable intelligent surface and the first reference signal.

Step 806 is similar to step 704. For details, refer to the description of step 704 in the embodiment shown in FIG. 7. Details are not described herein again.

In some optional embodiments, after step 806, the terminal device further performs step 808, that is, sends the target location to the network device, so that the network device sends the target location to a network side, and the network side provides diversified services based on the target location.

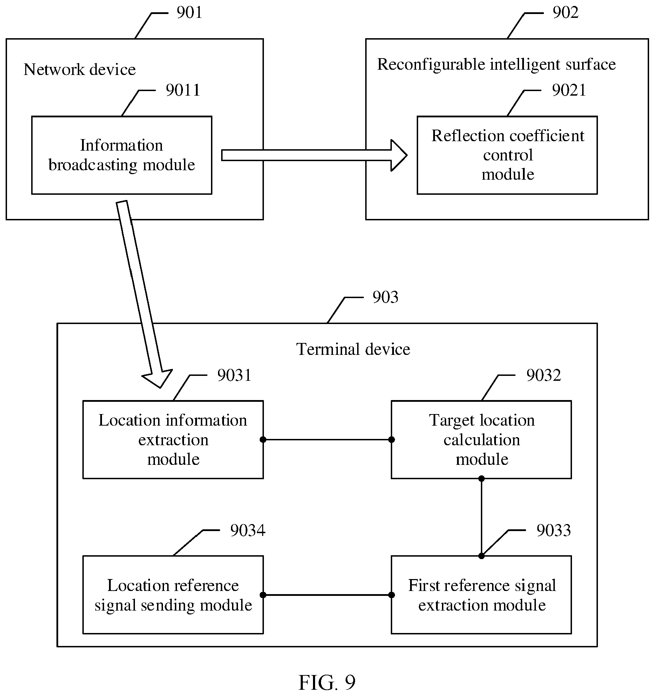

Based on the embodiment shown in FIG. 8, in this embodiment of this application, a logical relationship between modules in the communication system is shown in FIG. 9.

As shown in FIG. 9, a network device 901 includes an information broadcasting module 9011. A reconfigurable intelligent surface 902 includes a reflection coefficient control module 9021. A terminal device 903 includes a location information extraction module 9031, a target location calculation module 9032, a first reference information extraction module 9033, and a location reference signal sending module 9034.

The information broadcasting module 9011 is configured to broadcast location information of the reconfigurable intelligent surface, and send control information used to change a reflection coefficient of the reconfigurable intelligent surface. This corresponds to step 801 and step 807 in the embodiment shown in FIG. 8. The reflection coefficient control module 9021 is configured to change the reflection coefficient of the reconfigurable intelligent surface 902. The location information extraction module 9031 is configured to obtain the location information of the reconfigurable intelligent surface. This corresponds to step 802 in the embodiment shown in FIG. 8. The location reference signal sending module 9034 sends a location reference signal. This corresponds to step 803 in the embodiment shown in FIG. 8. The first reference signal extraction module 9033 is configured to obtain a first reference signal. This corresponds to step 805 in the embodiment shown in FIG. 8. The target location calculation module 9032 is configured to determine a target location of the terminal device 903. This corresponds to step 806 in the embodiment shown in FIG. 8.

In the foregoing embodiment, the location information extraction module is located in the terminal device, and the terminal device executes a positioning algorithm and reports the target location of the terminal device to the network device. In some optional embodiments, the network device may directly locate the terminal device by receiving pilot information sent by the terminal device. The pilot information includes the location reference signal.

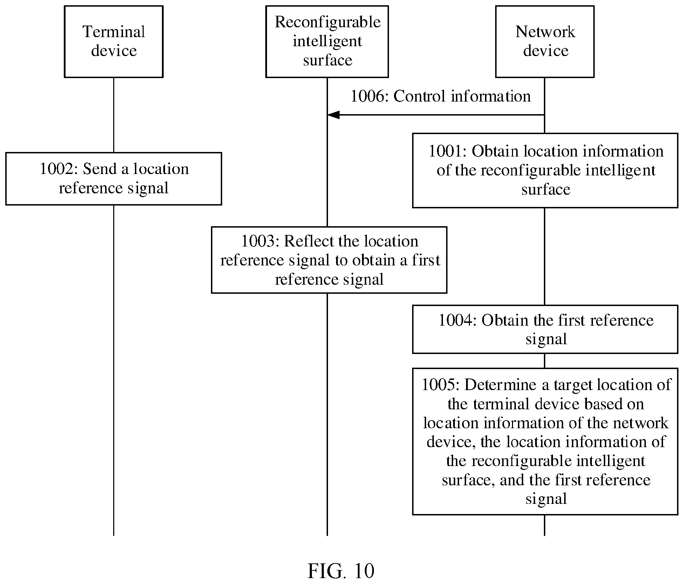

The following describes this case. FIG. 10 is an entity flowchart of an indoor positioning method according to an embodiment of this application. The method includes the following steps.

1001: A network device obtains location information of a reconfigurable intelligent surface.

After the reconfigurable intelligent surface is installed, the location information of the reconfigurable intelligent surface is fixed, and the location information may be stored in the network device.

1002: The terminal device sends a location reference signal.

Step 1002 is similar to step 803. For details, refer to the description of step 803 in the embodiment shown in FIG. 8. Details are not described herein again.

1003: The reconfigurable intelligent surface reflects the location reference signal to obtain a first reference signal.

Optionally, before step 1003, the network device may perform step 1006, that is, send control information to a controller of the reconfigurable intelligent surface. The control information indicates the reconfigurable intelligent surface to change a reflection coefficient according to a preset rule. In this case, the first reference signal is obtained by the reconfigurable intelligent surface by reflecting the location reference information based on the reflection coefficient. The reflection coefficient changes according to the preset rule, and a change form may be periodic or non-periodic. This is not specifically limited herein.

1004: The network device obtains the first reference signal.

Step 1003 and step 1004 are similar to step 804 and step 805. For details, refer to the description of step 804 and step 805 in the embodiment shown in FIG. 8. Details are not described herein again. A difference lies in that step 1003 and step 1004 are performed by the network device instead of the terminal device.

1005: The network device determines a target location of the terminal device based on location information of the network device, the location information of the reconfigurable intelligent surface, and the first reference signal.

A specific process in which the network device determines the target location of the terminal device based on these pieces of information is similar to step 303 in the embodiment shown in FIG. 3. The location information of the network device is the first location information in the embodiment shown in FIG. 3, and the location information of the reconfigurable intelligent surface is the second location information in the embodiment shown in FIG. 3. For details, refer to the description of step 303 in the embodiment shown in FIG. 3. Details are not described herein again. A difference lies in that step 1005 is performed by the network device instead of the terminal device.

In this embodiment of this application, the network device obtains various types of data, and calculates the target location of the terminal device. This reduces a calculation amount of the terminal device and saves calculation resources of the terminal device. In addition, compared with that in an existing technical solution, in this embodiment of this application, one network device can obtain an accurate target location. This reduces network deployment difficulty and costs.

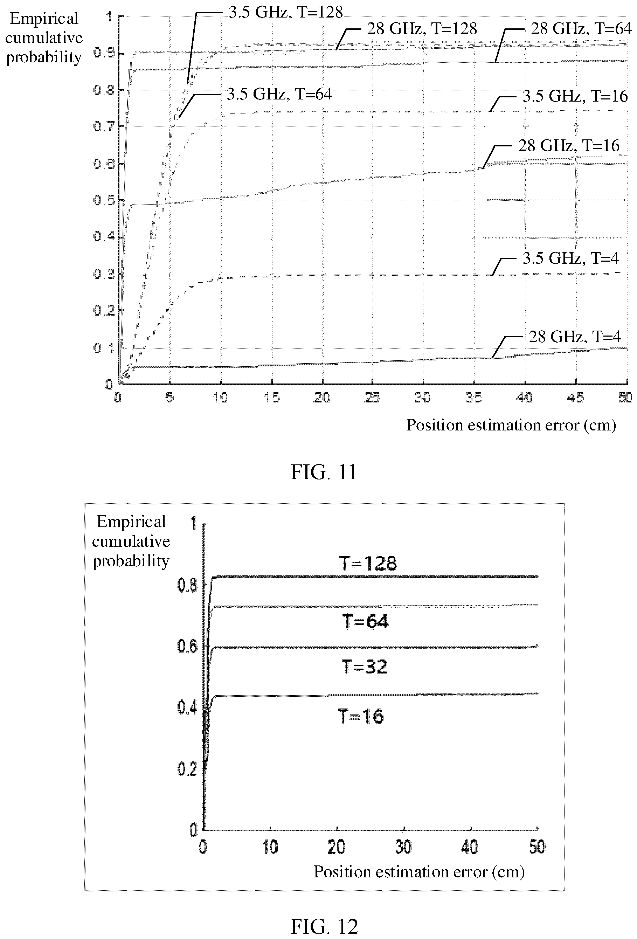

Beneficial effects brought by the indoor positioning method provided in embodiments of this application are described below with reference to an experiment result. FIG. 11 and FIG. 12 are schematic diagrams of an experimental result of an indoor positioning method according to an embodiment of this application.

FIG. 11 and FIG. 12 both reflect an error caused by the indoor positioning method provided in embodiments of this application in a form of a cumulative probability distribution function (cumulative distribution function, CDF) curve. In FIG. 11 and FIG. 12, a horizontal coordinate indicates a position estimation error (position estimation error), and a vertical coordinate indicates an empirical cumulative probability (empirical CDF), that is, a probability that an error is less than a specific value under a specific condition.

FIG. 11 corresponds to a case of " 1. The network device sends the location reference signal", that is, corresponds to embodiments shown in FIG. 4 to FIG. 6. FIG. 12 corresponds to a case of "2. The terminal device sends the location reference signal", that is, corresponds to embodiments shown in FIG. 7 to FIG. 9.

As shown in FIG. 11, it can be learned that in a case in which "the network device sends the location reference signal", when a carrier frequency is 3.5 GHz, an experimental result of total transmission duration T of 64 time units is very similar to that of T of 128 time units. When T is 128 time units, and the carrier frequency is 3.5 GHz or 28 GHz, a probability that a positioning error is less than 10 cm is 90%. This shows high positioning accuracy. The time units include a quantity of transmission symbols or a quantity of transmission timeslots.

It should be noted that each curve in FIG. 12 is obtained through measurement when the carrier frequency is 3.5 GHz. As shown in FIG. 12, it can be learned that in a case in which "the terminal device sends the location reference signal", when T is 128 time units and the carrier frequency is 3.5 GHz, a probability that a positioning error is less than 5 cm is 82%. This shows high positioning accuracy.

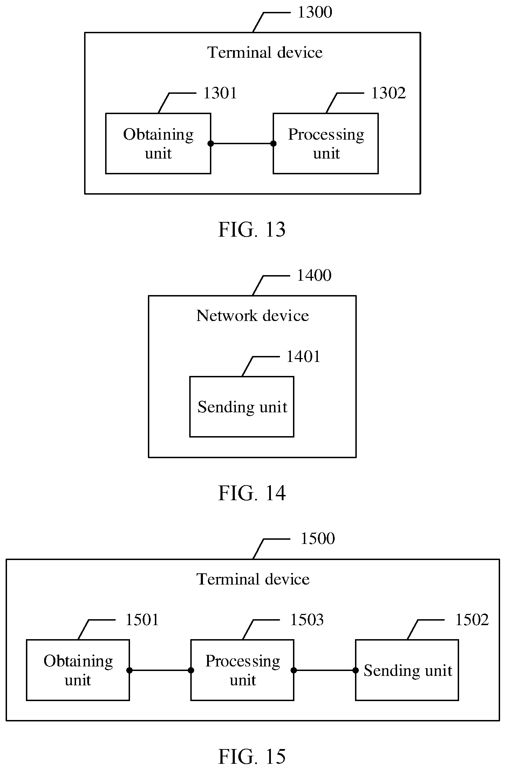

The following describes apparatuses provided in embodiments of this application. FIG. 13 is a schematic diagram of a structure of a terminal device according to an embodiment of this application. The terminal device is located indoors, and the terminal device 1300 includes:

an obtaining unit 1301, configured to receive first location information and second location information from a network device, where the first location information indicates a location of the network device, and the second location information indicates a location of a reconfigurable intelligent surface; and further configured to obtain a first reference signal, where the first reference signal is a signal obtained by the reconfigurable intelligent surface by reflecting a location reference signal sent by the network device; and

a processing unit 1302, configured to determine a target location of the terminal device based on the first reference signal, the first location information, and the second location information.

In some optional embodiments, the obtaining unit 1301 is further configured to obtain a reference signal set, where the reference signal set includes the first reference signal and a second reference signal obtained by a scatterer by scattering the location reference signal, and the first reference signal is the signal obtained by the reconfigurable intelligent surface by reflecting the location reference signal based on a reflection coefficient.

The obtaining unit 1301 is specifically configured to obtain the first reference signal from the reference signal set based on the reflection coefficient.

In some optional embodiments, the reflection coefficient changes according to a preset rule. The reflection coefficient changes according to the preset rule, and a change form may be periodic or non-periodic. This is not specifically limited herein.

In some optional embodiments, the location reference signal is separately sent by the network device on different subcarriers at different moments.

The terminal device 1300 may perform operations performed by the terminal device in embodiments shown in FIG. 1, FIG. 3, FIG. 5, and FIG. 6. Details are not described herein again.

FIG. 14 is a schematic diagram of a structure of a network device according to an embodiment of this application. The network device 1400 includes:

a sending unit 1401, configured to send first location information of the network device and second location information of a reconfigurable intelligent surface to a terminal device, where the terminal device is located indoors; and further configured to send a location reference signal, so that the reconfigurable intelligent surface reflects the location reference signal to obtain a reference signal, and the terminal device determines a target location of the terminal device based on the reference signal, the first location information, and the second location information.

In some optional embodiments, the sending unit 1401 is specifically configured to separately send the location reference signal on different subcarriers at different moments.

In some optional embodiments, the sending unit 1401 is further configured to send control information to a controller of the reconfigurable intelligent surface, where the control information indicates the reconfigurable intelligent surface to change a reflection coefficient according to a preset rule. That the reconfigurable intelligent surface reflects the location reference signal to obtain a reference signal includes that: the reconfigurable intelligent surface reflects the location reference signal based on the reflection coefficient to obtain the reference signal.

The network device 1400 may perform operations performed by the network device in embodiments shown in FIG. 1 and FIG. 4 to FIG. 6. Details are not described herein again.

FIG. 15 is a schematic diagram of a structure of a terminal device according to an embodiment of this application. The terminal device is located indoors, and the terminal device 1500 includes:

an obtaining unit 1501, configured to receive location information from a network device, where the location information indicates a location of a reconfigurable intelligent surface;

a sending unit 1502, configured to send a location reference signal, where the location reference signal is used to determine a target location of the terminal device, where

the obtaining unit 1501 is further configured to obtain a first reference signal, where the first reference signal is a signal obtained by the reconfigurable intelligent surface by reflecting the location reference signal; and

a processing unit 1503, configured to determine the target location of the terminal device based on the first reference signal and the location information.

In some optional embodiments, the obtaining unit 1501 is specifically configured to: obtain a reference signal set, where the reference signal set includes the first reference signal and a second reference signal obtained by a scatterer by scattering the location reference signal, and the first reference signal is the signal obtained by the reconfigurable intelligent surface by reflecting the location reference signal based on a reflection coefficient; and obtain the first reference signal from the reference signal set based on the reflection coefficient.

In some optional embodiments, the sending unit 1502 is specifically configured to separately send the location reference signal on different subcarriers at different moments.

The terminal device 1500 may perform operations performed by the terminal device in embodiments shown in FIG. 1 and FIG. 7 to FIG. 9. Details are not described herein again.

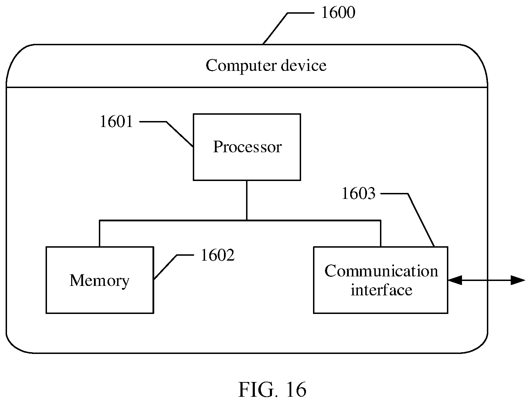

The following describes a computer device provided in embodiments of this application. FIG. 16 is a schematic diagram of a structure of a computer device according to an embodiment of this application. The computer device 1600 includes a processor 1601 and a memory 1602. The memory 1602 stores one or more application programs or data.

The memory 1602 may be volatile storage or persistent storage. A program stored in the memory 1602 may include one or more modules, and each module may be configured to perform a series of operations performed by the computer device 1600. Further, the processor 1601 may communicate with the memory 1602, and perform, on the computer device 1600, a series of instruction operations in the memory 1602. The processor 1601 may be a central processing unit (central processing unit, CPU), or may be a single-core processor. In addition, the processor 1601 may be a processor of another type, for example, a dual-core processor. This is not specifically limited herein.

The computer device 1600 may further include one or more communication interfaces 1603 and one or more operating systems, such as Windows Server™, Mac OS X™, Unix™, Linux™ and FreeBSD™.

The computer device 1600 may perform operations performed by the terminal device or the network device in embodiments shown in FIG. 1 to FIG. 10. Details are not described herein again.

It may be clearly understood by a person skilled in the art that, for a purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in a form of a software functional unit and sold or used as an independent product, the integrated unit may be stored in a computer-readable storage medium. Based on this understanding, the technical solutions of this application essentially, the part contributing to the conventional technology, or all or some of the technical solutions may be implemented in a form of a software product. A computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

**Claims**

1. An indoor positioning method, wherein the method is applied to a terminal device, the terminal device is located indoors, and the method comprises:

   receiving first location information and second location information from a network device, wherein the first location information indicates a location of the network device, and the second location information indicates a location of a reconfigurable intelligent surface;
   obtaining a first reference signal, wherein the first reference signal is a signal obtained by the reconfigurable intelligent surface by reflecting a location reference signal sent by the network device; and
   determining a target location of the terminal device based on the first reference signal, the first location information, and the second location information.

2. The method according to claim 1, wherein the obtaining a first reference signal comprises:

   obtaining a reference signal set, wherein the reference signal set comprises the first reference signal and a second reference signal obtained by a scatterer by scattering the location reference signal, and the first reference signal is the signal obtained by the reconfigurable intelligent surface by reflecting the location reference signal based on a reflection coefficient; and

obtaining the first reference signal from the reference signal set based on the reflection coefficient.

3. The method according to claim 2, wherein the reflection coefficient changes according to a preset rule.

4. The method according to any one of claims 1 to 3, wherein the location reference signal is separately sent by the network device on different subcarriers at different moments.

5. An indoor positioning method, wherein the method is applied to a network device, and the method comprises:

sending first location information of the network device and second location information of a reconfigurable intelligent surface to a terminal device, wherein the terminal device is located indoors; and

sending a location reference signal, so that the reconfigurable intelligent surface reflects the location reference signal to obtain a reference signal, and the terminal device determines a target location of the terminal device based on the reference signal, the first location information, and the second location information.

6. The method according to claim 5, wherein the sending a location reference signal comprises: separately sending the location reference signal on different subcarriers at different moments.

7. The method according to claim 5 or 6, wherein the method further comprises:

sending control information to a controller of the reconfigurable intelligent surface, wherein the control information indicates the reconfigurable intelligent surface to change a reflection coefficient according to a preset rule; and that the reconfigurable intelligent surface reflects the location reference signal to obtain a reference signal comprises: the reconfigurable intelligent surface reflects the location reference signal based on the reflection coefficient to obtain the reference signal.

8. A communication system, comprising a network device, a terminal device, and a reconfigurable intelligent surface, wherein

the network device is configured to send first location information of the network device and second location information of the reconfigurable intelligent surface;

the terminal device is configured to receive the first location information and the second location information;

the network device is further configured to send a location reference signal;

the reconfigurable intelligent surface is configured to reflect the location reference signal to obtain a first reference signal; and

the terminal device is further configured to: obtain the first reference signal; and determine a target location of the terminal device based on the first location information, the second location information, and the first reference signal.

9. The communication system according to claim 8, wherein the communication system further comprises a scatterer, wherein

the scatterer is configured to scatter the location reference signal to obtain a second reference signal; and the terminal device is specifically configured to:

obtain a reference signal set, wherein the reference signal set comprises the first reference signal and the second reference signal, and the first reference signal is a signal obtained by the reconfigurable intelligent surface by reflecting the location reference signal based on a reflection coefficient; and

obtain the first reference signal from the reference signal set based on the reflection coefficient.

10. The communication system according to claim 9, wherein the network device is further configured to send control information to a controller of the reconfigurable intelligent surface, wherein the control information indicates the reconfigurable intelligent surface to change the reflection coefficient according to a preset rule.

11. The communication system according to any one of claims 8 to 10, wherein the network device is specifically configured to separately send the location reference signal on different subcarriers at different moments.

12. An indoor positioning method, wherein the method is applied to a terminal device, the terminal device is located indoors, and the method comprises:

   receiving location information from a network device, wherein the location information indicates a location of a reconfigurable intelligent surface;
   sending a location reference signal, wherein the location reference signal is used to determine a target location of the terminal device;
   obtaining a first reference signal, wherein the first reference signal is a signal obtained by the reconfigurable intelligent surface by reflecting the location reference signal; and
   determining the target location of the terminal device based on the first reference signal and the location information.

13. The method according to claim 12, wherein the obtaining a first reference signal comprises:

   obtaining a reference signal set, wherein the reference signal set comprises the first reference signal and a second reference signal obtained by a scatterer by scattering the location reference signal, and the first reference signal is the signal obtained by the reconfigurable intelligent surface by reflecting the location reference signal based on a reflection coefficient; and
   obtaining the first reference signal from the reference signal set based on the reflection coefficient.

14. The method according to claim 13, wherein the reflection coefficient changes according to a preset rule.

15. The method according to any one of claims 12 to 14, wherein the sending a location reference signal comprises:
   separately sending the location reference signal on different subcarriers at different moments.

16. A communication system, comprising a network device, a terminal device, and a reconfigurable intelligent surface, wherein

   the network device is configured to send location information, wherein the location information indicates a location of the reconfigurable intelligent surface;
   the terminal device is configured to send a location reference signal, wherein the location reference signal is used to determine a target location of the terminal device;
   the reconfigurable intelligent surface is configured to reflect the location reference signal to obtain a first reference signal; and
   the terminal device is further configured to:

      obtain the location information and the first reference signal; and
      determine the target location of the terminal device based on the location information and the first reference signal.

17. The communication system according to claim 16, wherein the communication system further comprises a scatterer, wherein

   the scatterer is configured to scatter the location reference signal to obtain a second reference signal; and
   the terminal device is specifically configured to:

      obtain a reference signal set, wherein the reference signal set comprises the first reference signal and the second reference signal, and the first reference signal is a signal obtained by the reconfigurable intelligent surface by reflecting the location reference signal based on a reflection coefficient; and
      obtain the first reference signal from the reference signal set based on the reflection coefficient.

18. The communication system according to claim 17, wherein the network device is further configured to send control information to a controller of the reconfigurable intelligent surface, wherein the control information indicates the reconfigurable intelligent surface to change the reflection coefficient according to a preset rule.

19. The communication system according to any one of claims 16 to 18, wherein the terminal device is specifically configured to separately send the location reference signal on different subcarriers at different moments.

20. A terminal device, wherein the terminal device is located indoors, and the terminal device comprises:

an obtaining unit, configured to receive first location information and second location information from a network device, wherein the first location information indicates a location of the network device, and the second location information indicates a location of a reconfigurable intelligent surface, wherein
the obtaining unit is further configured to obtain a first reference signal, wherein the first reference signal is a signal obtained by the reconfigurable intelligent surface by reflecting a location reference signal sent by the network device; and
a processing unit, configured to determine a target location of the terminal device based on the first reference signal, the first location information, and the second location information.

21. The terminal device according to claim 20, wherein the obtaining unit is further configured to:

obtain a reference signal set, wherein the reference signal set comprises the first reference signal and a second reference signal obtained by a scatterer by scattering the location reference signal, and the first reference signal is the signal obtained by the reconfigurable intelligent surface by reflecting the location reference signal based on a reflection coefficient; and
the obtaining unit is specifically configured to obtain the first reference signal from the reference signal set based on the reflection coefficient.

22. A network device, comprising:

a sending unit, configured to send first location information of the network device and second location information of a reconfigurable intelligent surface to a terminal device, wherein the terminal device is located indoors, wherein the sending unit is further configured to send a location reference signal, so that the reconfigurable intelligent surface reflects the location reference signal to obtain a reference signal, and the terminal device determines a target location of the terminal device based on the reference signal, the first location information, and the second location information.

23. The network device according to claim 22, wherein the sending unit is specifically configured to separately send the location reference signal on different subcarriers at different moments.

24. The network device according to claim 22 or 23, wherein the sending unit is further configured to send control information to a controller of the reconfigurable intelligent surface, wherein the control information indicates the reconfigurable intelligent surface to change a reflection coefficient according to a preset rule; and
that the reconfigurable intelligent surface reflects the location reference signal to obtain a reference signal comprises:
the reconfigurable intelligent surface reflects the location reference signal based on the reflection coefficient to obtain the reference signal.

25. A terminal device, wherein the terminal device is located indoors, and the terminal device comprises:

an obtaining unit, configured to receive location information from a network device, wherein the location information indicates a location of a reconfigurable intelligent surface;
a sending unit, configured to send a location reference signal, wherein the location reference signal is used to determine a target location of the terminal device, wherein
the obtaining unit is further configured to obtain a first reference signal, wherein the first reference signal is a signal obtained by the reconfigurable intelligent surface by reflecting the location reference signal; and
a processing unit, configured to determine the target location of the terminal device based on the first reference signal and the location information.

26. The terminal device according to claim 25, wherein the obtaining unit is specifically configured to:

obtain a reference signal set, wherein the reference signal set comprises the first reference signal and a second reference signal obtained by a scatterer by scattering the location reference signal, and the first reference signal is the signal obtained by the reconfigurable intelligent surface by reflecting the location reference signal based on a reflection coefficient; and

obtain the first reference signal from the reference signal set based on the reflection coefficient.

27. The terminal device according to claim 25 or 26, wherein the sending unit is specifically configured to separately send the location reference signal on different subcarriers at different moments.

28. A computer device, comprising a processor, a memory, and a communication interface, wherein

   the processor and the memory are connected to the communication interface; and
   the processor is configured to perform the method according to any one of claims 1 to 7 or the method according to any one of claims 12 to 15.

29. A computer-readable storage medium, storing instructions, wherein when the instructions are run on a computer, the computer is enabled to perform the method according to any one of claims 1 to 7 or the method according to any one of claims 12 to 15.

30. A computer program product, wherein when the computer program product is executed on a computer, the computer performs the method according to any one of claims 1 to 7 or the method according to any one of claims 12 to 15.

(a)            (b)

FIG. 1

FIG. 2

Receive first location information and second location information from a network device, where the first location information indicates a location of the network device, and the second location information indicates a location of a reconfigurable intelligent surface ⟋— 301

Obtain a first reference signal, where the first reference signal is a signal obtained by the reconfigurable intelligent surface by reflecting a location reference signal sent by the network device ⟋— 302

Determine a target location of a terminal device based on the first reference signal, the first location information, and the second location information ⟋— 303

FIG. 3

Send first location information of a network device and second location information of a reconfigurable intelligent surface to a terminal device, where the terminal device is located indoors ⟋— 401

Send a location reference signal, so that the reconfigurable intelligent surface reflects the location reference signal to obtain a reference signal, and the terminal device determines a target location of the terminal device based on the reference signal, the first location information, and the second location information ⟋— 402

FIG. 4

| Terminal device | Reconfigurable intelligent surface | Network device |
|---|---|---|

507: Control information

501: First location information and second location information

502: Receive the first location information and the second location information

503: Send a location reference signal

504: Reflect the location reference signal to obtain a first reference signal

505: Obtain the first reference signal

506: Determine a target location based on the first location information, the second location information, and the first reference signal

508: Target location

FIG. 5

601

Network device

6011

Information broadcasting module

6012

Location reference signal sending module

602

Reconfigurable intelligent surface

6021

Reflection coefficient control module

603

Terminal device

6031

Location information extraction module

6032

Target location calculation module

6033

First reference signal extraction module

FIG. 6

| Receive location information from a network device, where the location information indicates a location of a reconfigurable intelligent surface | 701 |

| Send a location reference signal, where the location reference signal is used to determine a target location of a terminal device | 702 |

| Obtain a first reference signal, where the first reference signal is a signal obtained by the reconfigurable intelligent surface by reflecting the location reference signal | 703 |

| Determine the target location of the terminal device based on the first reference signal and the location information | 704 |

FIG. 7

| Terminal device | Reconfigurable intelligent surface | Network device |
|---|---|---|

807: Control information

801: Location information of the reconfigurable intelligent surface

802: Obtain the location information of the reconfigurable intelligent surface

803: Send a location reference signal

804: Reflect the location reference signal to obtain a first reference signal

805: Obtain the first reference signal

806: Determine a target location based on the location information of the reconfigurable intelligent surface and the first reference signal

808: Target location

FIG. 8

901

Network device

9011

Information broadcasting module

902

Reconfigurable intelligent surface

9021

Reflection coefficient control module

903

Terminal device

9031

Location information extraction module

9032

Target location calculation module

9034

Location reference signal sending module

9033

First reference signal extraction module

FIG. 9

| Terminal device | Reconfigurable intelligent surface | Network device |
|---|---|---|

1006: Control information

1001: Obtain location information of the reconfigurable intelligent surface

1002: Send a location reference signal

1003: Reflect the location reference signal to obtain a first reference signal

1004: Obtain the first reference signal

1005: Determine a target location of the terminal device based on location information of the network device, the location information of the reconfigurable intelligent surface, and the first reference signal

FIG. 10

FIG. 11

FIG. 12

FIG. 13

FIG. 14

FIG. 15

1600

Computer device

1601

Processor

1603

1602

Memory

Communication interface

FIG. 16

## INTERNATIONAL SEARCH REPORT

| International application No. |
| --- |
| **PCT/CN2022/107407** |

### A. CLASSIFICATION OF SUBJECT MATTER

H04W 64/00(2009.01)i

According to International Patent Classification (IPC) or to both national classification and IPC

### B. FIELDS SEARCHED

Minimum documentation searched (classification system followed by classification symbols)

H04W; G01S

Documentation searched other than minimum documentation to the extent that such documents are included in the fields searched

Electronic data base consulted during the international search (name of data base and, where practicable, search terms used)

CNPAT, CNKI, WPI, EPODOC: 室内, 定位, 反射面, 参考信号, 位置, 反射, 终端, 网络设备, 散射, indoor, positioning, location, reflective surfaces, reference signals, position, reflection, terminal, network, scatter

### C. DOCUMENTS CONSIDERED TO BE RELEVANT

| Category* | Citation of document, with indication, where appropriate, of the relevant passages | Relevant to claim No. |
| --- | --- | --- |
| X | CN 111866726 A (ZTE CORP.) 30 October 2020 (2020-10-30)<br>description, paragraphs 0005-0023 and 0093-0154 | 1-11, 20-24, 28-30 |
| X | WO 2020256353 A1 (SEOUL NATIONAL UNIVERSITY R&DB FOUNDATION) 24 December 2020 (2020-12-24)<br>description, paragraphs 46-81 | 12-19, 25-30 |
| A | CN 111912409 A (PEKING UNIVERSITY) 10 November 2020 (2020-11-10)<br>entire document | 1-30 |
| A | CN 112346009 A (GUANGDONG PROVINCE NEW GENERATION COMMUNICATION AND NETWORK INNOVATION RES INSTITUTE) 09 February 2021 (2021-02-09)<br>entire document | 1-30 |
| A | CN 113225704 A (UNIVERSITY OF ELECTRONIC SCIENCE AND TECHNOLOGY OF CHINA) 06 August 2021 (2021-08-06)<br>entire document | 1-30 |

☐ Further documents are listed in the continuation of Box C.    ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **29 September 2022** | **19 October 2022** |

| Name and mailing address of the ISA/CN | Authorized officer |
| --- | --- |
| **China National Intellectual Property Administration (ISA/ CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/107407**

| Patent document cited in search report | | | Publication date (day/month/year) | Patent family member(s) | | | Publication date (day/month/year) |
|---|---|---|---|---|---|---|---|
| CN | 111866726 | A | 30 October 2020 | WO | 2022001401 | A1 | 06 January 2022 |
| WO | 2020256353 | A1 | 24 December 2020 | US | 2022228863 | A1 | 21 July 2022 |
| | | | | KR | 102180304 | B1 | 18 November 2020 |
| | | | | EP | 3974870 | A1 | 30 March 2022 |
| CN | 111912409 | A | 10 November 2020 | | None | | |
| CN | 112346009 | A | 09 February 2021 | WO | 2022148093 | A1 | 14 July 2022 |
| CN | 113225704 | A | 06 August 2021 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111433802